# EUROPÄISCHE PATENTSCHRIFT

(11) **EP 0 484 741 B1**
(45) Veröffentlichungstag und Bekanntmachung des Hinweises auf die Patenterteilung: **18.01.1995**
(21) Anmeldenummer: 91118062.8
(22) Anmeldetag: 23.10.1991
(51) Int. Cl.: E04B 2/76, E04B 1/19, F16B 17/00

(54) **Gerüstknoten**
Framework node
Noeud pour treillis

(30) Priorität: 09.11.1990 DE 9015416 U
(43) Veröffentlichungstag der Anmeldung: 13.05.1992
(73) Patentinhaber: Österreichische DOKA Schalungstechnik Gesellschaft m.b.H., 3300 Amstetten (AT)
(72) Erfinder:
(74) Vertreter: Füchsle, Klaus, Dipl.-Ing.

(56) Entgegenhaltungen:
- EP-A- 0 158 149
- DE-A- 2 531 263
- US-A- 1 797 691
- US-A- 3 778 175
- US-A- 3 778 175

## Beschreibung

Die Erfindung betrifft einen Gerüstknoten für Unterstellungsgerüste aus Aluminium sowie einen Gerüstträger für einen derartigen Gerüstknoten.

Der Gerüstbau ist ein erheblicher Kostenfaktor auf einer Baustelle. Es besteht daher das Erfordernis, noch belastbare Gerüste zu schaffen, die gleichzeitig aber auch wirtschaftlich herstellbar sein müssen.

Um aus Gründen der einfachen Handhabbarkeit Baugerüste möglichst leicht zu gestalten, werden diese heute zunehmend aus Leichtmetall, insbesondere Aluminium, hergestellt. Bei Aluminium können aber Schweißverbindungen zwischen den Stützen bzw. Trägern der Gerüste nur bedingt eingesetzt werden, weil beim Schweißen von Aluminium eine Minderung der Festigkeit bis zu 50% eintritt. Diese müßte durch eine entsprechende Erhöhung des Querschnitts der Profile des Gerüsts kompensiert werden, was wieder zu einem Mehrgewicht sowie zu einer Kostenerhöhung führt. Darüber hinaus muß bei einer Schweißverbindung bei Aluminium eine Vorbehandlung, insbesondere ein Entfernen der Oxidschicht, durchgeführt werden, wodurch sich durch Schweißen hergestellte Aluminium-Verbindungen entsprechend verteuern.

Bei nicht hochbelasteten Gerüsten, z.B. Arbeitsgerüsten, wird die Verbindung der Profile teilweise bereits durch Verpressen hergestellt. Dabei erfolgt das Verpressen von zwei ineinandergeschobenen Profilen von innen nach außen. Nachdem hierfür die Preßwerkzeuge in das Innenrohr eingeführt werden müssen, gestalten sich Werkzeug sowie Preßvorgang aufwendig. Eine Verpressung von außen nach innen erfolgt derzeit vorwiegend nur bei Rohr- bzw. Rahmenenden.

Bei Aluminium-Konstruktionen werden die Knoten zwischen den Profilen auch durch Schraubverbindungen hergestellt. So ist in der VDI-Zeitschrift Bd. 129 (1987), S. 22, eine Traganordnung dargestellt, bei der die Verbindung zwischen Träger und Strebe mittels einer Schraubplatte als Ringverbinder erzielt ist. Auf Seite 29 derselben Ausgabe der Zeitschrift ist eine weitere Schraubversion gezeigt, bei der Träger und Strebe über Eckstöße miteinander verbunden werden. Da Aluminium ein mechanisch nicht sehr widerstandsfähiges Metall ist, werden allerdings in Aluminium geschnittene Gewinde sehr bald verschleißen. Daher wird in der "Fahrzeug + Karosserie", Ausgabe 1/1984, vorgeschlagen, Gewindeplättchen zu verwenden, die hinter die eigentliche Eckverbindung in einer T-Schiene am Träger und in der Strebe eingelegt werden und die mechanischen Kräfte beim Anziehen der Schrauben aufnehmen sollen. Diese Maßnahme führt natürlich zu einer Verteuerung der Verbindungsstelle.

Aus der US-A-3 778 175 welche dem Oberbegriff des Anspruchs 1 entspricht, ist ein Gerüstknoten bekannt, der z.B. für Lagergebäude, Trennwände, Markisen und Aufbauten von Campingfahrzeugen verwendet wird. Bei diesem bekannten Gerüstknoten ist ein Fügeteil mit einem Profilkopf und einem aus zwei parallelen Laschen bestehenden Körper vorgesehen, auf den ein Hohlprofil mit einem rechteckigen Querschnitt aufgesetzt wird. Dabei schnappen die beiden Laschen mit ihren Enden in entsprechende Öffnungen des Hohlprofils ein. Die Verbindung zwischen dem Körper des Fügeteils und dem Hohlprofil erfolgt also mittels eines Schnappverschlusses, der bei Bedarf wieder lösbar ist. Der Profilkopf des Fügeteilkörpers wird dann in eine passende Profilschiene eines zweiten Hohlprofils eingeschoben. Somit werden bei diesem Gerüstknoten die beiden Hohlprofile mittels des Fügeteils in zueinander senkrechter Ausrichtung miteinander verbunden.

Bei einer Verwendung dieses vorbekannten Gerüstknotens für ein Unterstellungsgerüst ist jedoch problematisch, daß die Verbindung zwischen dem Fügeteil und dem darauf aufgeschobenen Hohlprofil mittels eines Schnappverschlusses erfolgt, der zwangsläufig Spiel hat, was sich nachteilig auf die Dauerfestigkeit bei hohen Lastspielzahlen auswirkt. Weiterhin ist bei der bekannten Konstruktion problematisch, daß die Festlegung des Profilkopfes des Fügeteils in der Profilschiene des zweiten Hohlprofils lediglich durch einen Reibschluß erfolgt und darüber hinaus keine definierte Festlegung dieser Verbindungsstelle vorgesehen ist.

Die DE-A-25 31 263 beschreibt die Verpressung eines Rohrstücks mit einem massiven Körper, auf den das Rohrstück aufgeschoben wird und der kalottenförmige Vertiefungen aufweist, in die die über den Vertiefungen liegenden Stellen des Rohrstücks eingepreßt werden. Die EP-A-0 158 149 offenbart eine Knotenpunktverbindung, bei der unter anderem ein rohrförmiger Stab über eine Büchse geschoben und mit dieser durch Einpressen umlaufender Ringsicken am Stab in entsprechende Ringnuten der Büchse verbunden wird.

Es ist die Aufgabe der Erfindung, eine wirtschaftlich herstellbare Gerüstanordnung zu schaffen, die eine einfache und deshalb kostengünstige Verbindung zwischen den Profilen aufweist und sich trotzdem durch eine hohe Dauerlastfestigkeit auszeichnet.

Diese Aufgabe wird durch einen Gerüstknoten mit den Merkmalen des Anspruchs 1 gelöst. Vorteilhafte Ausgestaltungen sind Gegenstand der Unteransprüche.

Erfindungsgemäß ist ein Fügeteil mit Profilkopf und Fügeteilkörper in einer zum Profilkopf kongruent ausgebildeten Profilschiene durch Verpressen unlösbar festgelegt und ein den Fügeteilkörper umschließendes Hohlprofil mit diesem ebenfalls durch Verpressen verbunden. Die Fügeteile sind dabei universell bzw. beliebig ausbildbare Bauteile für beliebig anzubringende und auszugestaltende Gerüstknoten. Sie können aus einem Strangpreß-Profil, u.U. einem Hohlprofil, gebildet sein und sind daher insbesondere deswegen kostengünstig herstellbar, weil sie keiner Vor- oder Nachbehandlung bedürfen. Die Fügeteile können aber auch als Gußstücke bzw. Schmiedestücke ausgebildet sein, insbesondere dann, wenn ein vom Rechteckquerschnitt abweichender Querschnitt der zu verbindenden Hohlrohre bzw. Hohlprofile notwendig bzw. gewünscht ist.

Durch das Verformen der Führungsleisten der Profilschiene beidseits des Profilkopfes wird eine definierte Verbindung geschaffen, die eine hohe Zug- und Biegefestigkeit aufweist, da längs des gesamten Verbindungsbereiches keine Festigkeitsminderung auftritt. Ein gleiches gilt für die Verbindungsstelle zwischen dem Fügeteilkörper und dem Hohlprofil.

Da die Verbindung zwischen Fügeteilkörper und Hohlprofil neben der Druckbelastung, die weitgehend durch die Auflagefläche zwischen Fügeteilkörper und Hohlprofil aufgefangen wird, auch einer Zugbelastung ausgesetzt ist, ist der Fügeteilkörper mit wenigstens einer Rippe versehen, die vorzugsweise senkrecht zur Längsachse des Fügeteils und damit senkrecht zur Achse des Hohlrohres verlaufend angeordnet ist. Das Hohlprofil ist mit dem Fügeteilkörper durch Linienverpressung verbunden, wobei die Preßlinien zumindest in Zugrichtung hinter einer Rippe verlaufen oder zwischen zwei Rippen verlaufen. Die Rippe bildet zusammen mit dem Verpreßbereich einen zum Kraftschluß zusätzlichen Formschluß, der ein Lösen des Hohlprofils vom Fügeteilkörper besonders zuverlässig verhindert.

Bei der Herstellung des Fügeteils als Strangpreß-Profil verlaufen zweckmäßigerweise die Rippen in die Richtung des Profils an den entsprechenden Flächen. Bei der Ausbildung des Fügeteils als Guß- bzw. Schmiedeteil können umlaufende Rippen vorhanden sein.

Um eine verkippsichere Lage des Profilkopfes des Fügeteils in der Profilschiene sicherzustellen, empfiehlt es sich, den Profilkopf des Fügeteils T-förmig auszubilden. Dieses hat weiterhin den Vorteil, daß das Fügeteil längs der Profilschiene leicht in die gewünschte Lage verschiebbar ist.

Verschiedenste Ausbildungen von Fügeteilkörper und Hohlprofil sind denkbar. Aus Zweckmäßigkeitsgründen stimmen die Innenabmessungen des Hohlprofiles nahezu mit den Außenabmessungen des Fügeteilkörpers überein. Im Querschnitt können, abhängig von der Herstellungsart, Fügeteilkörper und Hohlprofil rechteckig oder kreisförmig sein, es können aber auch andere Querschnittsformen, falls erwünscht, gewählt werden.

Die Preßverbindung zwischen dem Profilkopf des Fügeteils und der Profilschiene erfolgt durch Verformung der Profilschiene bzw. der sie im wesentlichen bildenden Leisten in Profilrichtung vor und hinter dem Profilkopf in Form von Preßnocken bzw. Einbeulungen. Zusätzlich kann eine Punktverpressung der Profilschiene im Bereich des Profilkopfes vorgenommen werden.

Die Erfindung betrifft ferner einen Gerüstträger bzw. ein Profil zum Ausbilden eines mit den erfindungsgemäßen Gerüstknoten ausgestatteten Gerüsts. Dieses Gerüstprofil ist dadurch gekennzeichnet, daß an ihm eine Mehrzahl von Profilschienen ausgebildet sind, so daß an diesem Gerüstprofil über die Länge in unterschiedliche Richtung weisende Fügeteile angeordnet werden können, an die entsprechend ausgerichtete Hohlrohre bzw. Hohlprofile anzuschließen sind. Damit können universell ausgebildete Gerüste erstellt werden.

Im folgenden soll die Erfindung lediglich beispielhaft anhand der beigefügten Zeichnungen erläutert werden. Es zeigt:
- Fig. 1: eine schematische Darstellung eines Fügeteils für einen erfindungsgemäßen Gerüstknoten,
- Fig. 1a: einen Längsschnitt des Fügeteils aus Fig. 1,
- Fig. 2: eine schematische Darstellung einer Profilleiste,
- Fig. 3: eine schematische Darstellung des in der Profilleiste festgelegten Fügeteiles,
- Fig. 4: eine Darstellung des Aufbringens eines Hohlprofiles zum Bilden eines Gerüstknotens,
- Fig. 5: einen erfindungsgemäßen Gerüstknoten,
- Fig. 6: eine perspektivische Ansicht des erfindungsgemäßen Gerüstknotens,
- Fig. 7: die Querschnittsansicht eines Gerüstträgers mit einem erfindungsgemäßen Gerüstknoten, und
- Fig. 8: eine Schnittansicht längs der Linie A-A aus Fig. 7.

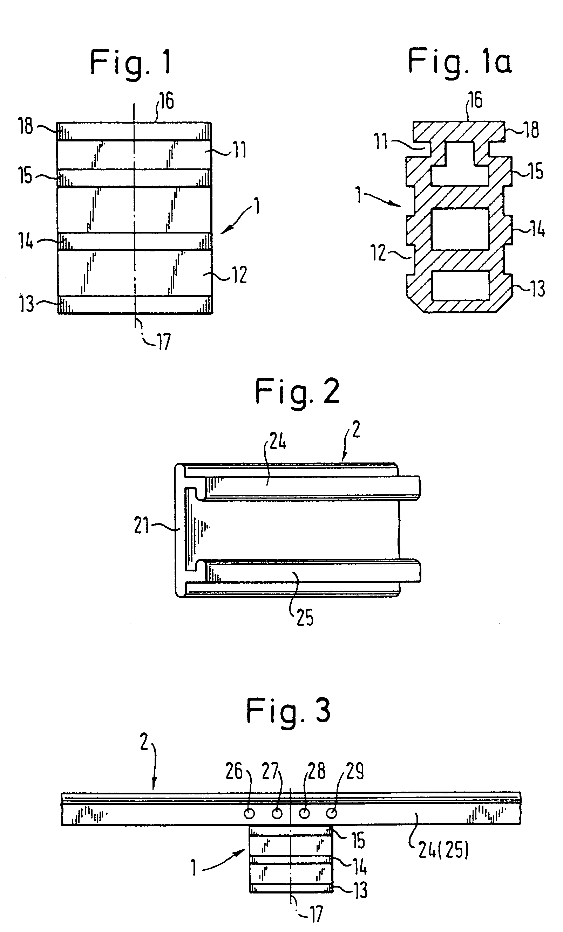

Fig. 1 zeigt ein Fügeteil 1, das aus einem Profilkopf 11 und einem Fügeteilkörper 12 besteht. Der Fügeteilkörper 12 ist mit einer Rippe 15 versehen, die gleichzeitig als Führung für die Bewegung des Fügeteils 1 in einer Profilschiene dient. Weiterhin sind Rippen 13, 14 vorgesehen, die in noch näher zu erläuternder Weise der Verpressung mit einem Hohlprofil dienen. Sämtliche Rippen 13, 14, 15 verlaufen senkrecht zur Längsachse 17 des Fügeteils 1. Der Profilkopf 11 ist mit Vorsprüngen 18 versehen, so daß sich in seinem oberen Bereich, wie in Fig. 1a deutlicher gezeigt, ein T-Profil 16 bildet. Die Fig. 1a macht ferner deutlich, daß der Fügeteil 1 bevorzugt als Strangpreß-Hohlprofil ausgebildet ist.

Eine zum Profilkopf 11 des Fügeteils 1 entsprechend ausgebildete Profilschiene 2 zeigt Fig. 2. Sie besteht im wesentlichen aus einer Längsstrebe 21 mit zwei parallel verlaufenden Führungsleisten 24, 25. Die Führungsleisten 24, 25 bilden einen Bereich, der dem T-Profil des Fügeteils kongruent ist.

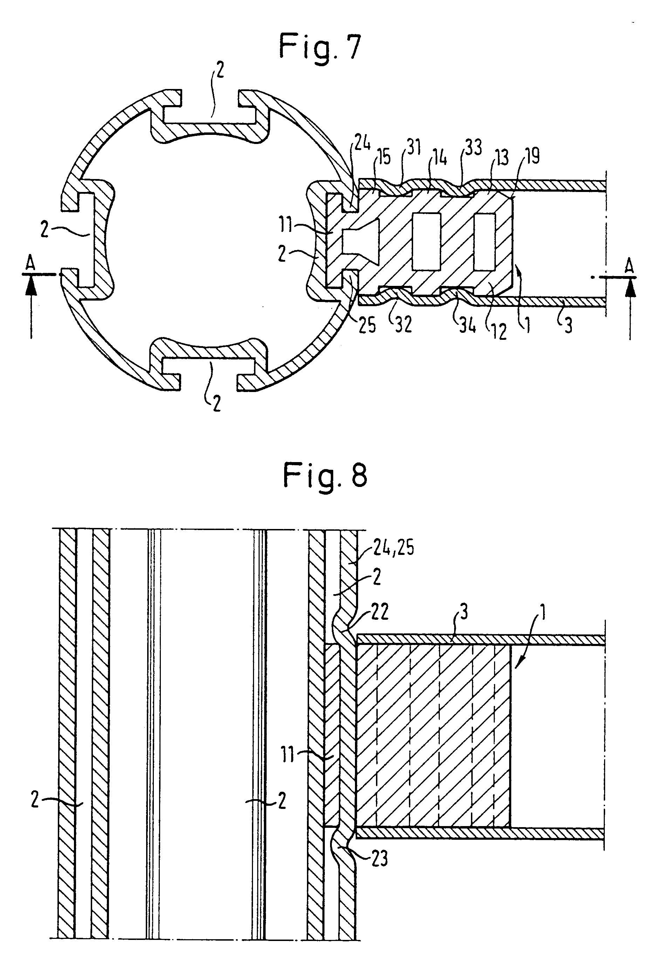

Das Fügeteil 1 kann daher mit seinem Profilkopf 11 in die Profilschiene 2 formschlüssig eingeführt und bis in die gewünschte Position geschoben werden. Ist diese Position erreicht, beispielsweise wie in Fig. 3 dargestellt, kann eine Preßverbindung zwischen Fügeteil 1 und Profilschiene 2 vorgenommen werden. Diese Verpressung kann vollautomatisch und maschinell durchgeführt werden. Bei der in Fig. 3 dargestellten Preßverbindung sind vier Preßpunkte 26, 27, 28, 29 auf der Profilschiene im Bereich der Führungsleiste 24 angebracht; entsprechende Preßpunkte befinden sich ebenso auf der gegenüberliegenden Führungsleiste 25. Durch die in etwa regelmäßig in Abständen voneinander angebrachten Preßpunkte wird die Querschnittsfläche der Führungsleisten 24, 25 nicht verringert, so daß sich keine Materialschwächung ergibt. Die Preßpunkte 26, 27, 28, 29 sichern das Fügeteil 1 gegen Verschiebungen in der Profilschiene 2. Die vorangehend beschriebene Punktverpressung kann zusätzlich zu einer Verpressung durch Preßnocken vorgenommen werden, wie sie in Zusammenhang mit Fig. 8 noch geschildert werden wird. Der in der Profilschiene 2 liegende Profilkopf wird teilweise von den Führungsleisten 24, 25 umschlossen, so daß die Verbindung eine hohe Zugbelastung in Richtung der Längsachse 17 des Fügeteils 1 aufnehmen kann.

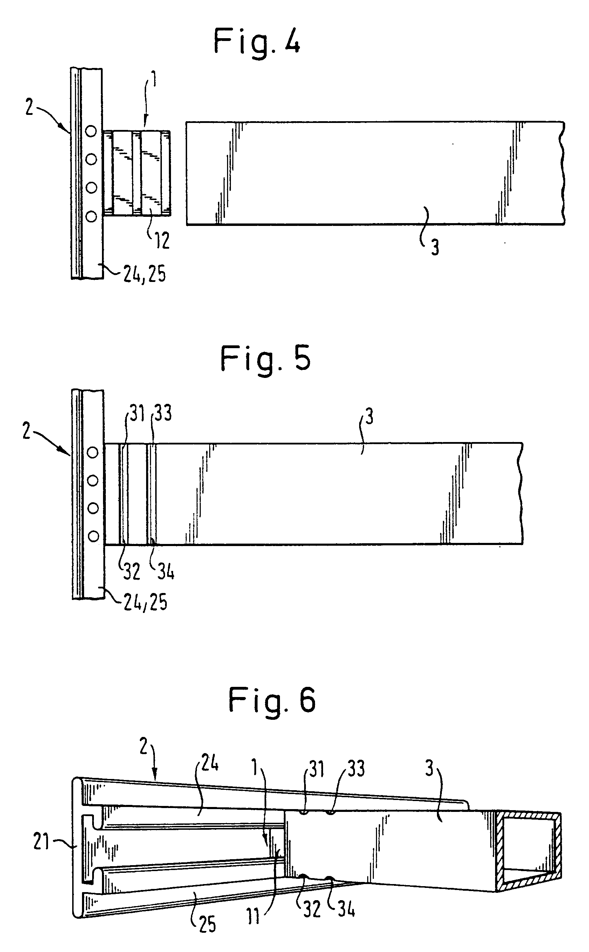

Auf die so vorbereitete Kombination von Fügeteil 1 und Profilschiene 2 wird, wie in Fig. 4 angedeutet, ein Hohlprofil 3 aufgeschoben. Da das Hohlprofil 3 in seinen Innenabmessungen etwa den Außenabmessungen des Fügeteilkörpers 12 entspricht, kann es gegen geringen Reibungswiderstand über den Fügeteilkörper 12 gleiten, bis es an die Führungsleisten 24, 25 anschlägt.

Anschließend werden zwischen den Rippen des Fügeteilkörpers Linienverpressungen 31, 32, 33, 34 an dem Hohlprofil 3 angebracht.

Die Preßverbindungen sind natürlich nicht zerstörungsfrei lösbar. Falls es aber erforderlich sein sollte, das Hohlprofil 3 auszutauschen, muß dieses lediglich in Längsrichtung im Bereich des Fügeteils aufgeschnitten werden, um es sodann abziehen zu können. Selbst wenn das Fügeteil dabei beschädigt würde, was insbesondere im Bereich der Rippen geschehen kann, werden diese Rippen doch ihre Funktion im wesentlichen beibehalten, so daß ein neues Hohlprofil aufgesetzt und verpreßt werden kann.

Fig. 6 zeigt eine perspektivische Ansicht des Gerüstknotens. Der Profilkopf 11 des Fügeteils 1 ist zwischen den Führungsleisten 24, 25 der Profilschiene 2 untergebracht und liegt an der Innenseite der Längsstrebe 21 an. Das Hohlprofil 3 ist paßgenau bis an die Führungsleisten 24, 25 auf das Fügeteil 1 geschoben und an seiner Ober- und Unterseite mit dem Fügeteil 1 längs der Preßlinien 31, 32, 33, 34 verpreßt.

Fig. 7 zeigt einen Gerüstträger im Querschnitt, der vier Profilleisten 2 aufweist, die für Gerüstknoten gemaß der vorliegenden Erfindung verwendet werden können. Bei diesem Ausführungsbeispiel ist eine Anordnung der Profilschienen 2 im winkelmäßigen Abstand von 90° gewählt, jedoch kann die Anordnung gemäß den Erfordernissen, je nach Einsatzzweck, angepaßt werden. Ein Fügeteil 1 ist mit seinem Profilkopf 11 in eine der Profilschienen 2 eingebracht, wobei die Abmessungen von Fügeteil 1 und Profilschiene 2 so gewählt sind, daß eine der Rippen 15 am Fügeteilkörper 12 einen Anschlag für die Führungsleisten 24, 25 der Profilschiene 2 bilden. Preßlinien 31, 32 sind zwischen den Rippen 14, 15, Preßlinien 33, 34 zwischen den Rippen 13, 14 des Fügeteils 1 angebracht. Das Fügeteil 1 ist im Bereich der Rippe 13 mit einer Abschrägung 19 versehen, die das Aufsetzen des Hohlprofiles 3 erleichtert.

Fig. 8 zeigt in der Schnittansicht längs der Linie A-A aus Fig. 7 das Festlegen des Fügeteils 1 in der Profilschiene 2 in deren Verlaufsrichtung. Danach sind oberhalb und unterhalb des Profilkopfes 11 Preßnocken 22, 23 in den Führungsleisten 24, 25 angebracht, so daß durch Einbuchtung bzw. Materialverdrängung in den Innenbereich der Führungsleiste 2 jeweils ein Anschlag für das Fügeteil 1 gebildet wird. Obwohl also die Verpressung nicht direkt mit dem Fügeteil 1 erfolgt, wird dieses doch sicher in der einmal festgelegten Position gehalten.

Belastungsversuche, die im Vergleich zwischen geschweißten Knoten und erfindungsgemäßen Gerüstknoten durchgeführt worden sind, haben gezeigt, daß im Zugversuch die Haltbarkeit beim erfindungsgemäßen Gerüstknoten um etwa 50% höher liegt als bei der geschweißten Verbindung.

## Patentansprüche

1. Gerüstknoten für Unterstellungsgerüste aus Aluminium, bei dem ein Fügeteil (1) mit Profilkopf (11) und Fügeteilkörper (12) in einer zum Profilkopf (11) kongruent ausgebildeten Profilschiene (2) mit Führungsleisten (24, 25) festgelegt und ein den Fügeteilkörper (12) umschließendes Hohlprofil (3) mit diesem verbunden ist dadurch gekennzeichnet daß der Profilkopf (11) des Fügeteils (1) in der Profilschiene (2) durch durch Verpressen gebildete Verformungen der Führungsleisten (24, 25) beidseits des Profilkopfes (11) in Form von Preßnocken (22, 23) festgelegt ist, und die Verbindung des Hohlprofils (3) mit dem Fügeteilkörper (12) durch Linienverpressung (31, 32, 33, 34) zumindest in Zugrichtung hinter einer Rippe (13, 14, 15) des Fügeteilkörpers (12) erfolgt.

2. Gerüstknoten nach Anspruch 1, dadurch **gekennzeichnet,** daß zur Festlegung des Fügeteils (1) in der Profilschiene (2) zusätzlich Punktverpressungen mit Preßpunkten (26, 27, 28, 29) entlang der Führungsleisten (24, 25) im Bereich des Profilkopfes (11) vorgesehen sind.

3. Gerüstknoten nach Anspruch 1 oder 2, dadurch **gekennzeichnet,** daß die Rippen (13, 14, 15) des Fügeteilkörpers (12) senkrecht zur Längsachse (17) des Fügeteils (1) und damit senkrecht zur Achse des Hohlprofils (3) verlaufend angeordnet sind.

4. Gerüstknoten nach einem der Ansprüche 1 bis 3, dadurch **gekennzeichnet,** daß der Profilkopf (11) des Fügeteils (1) T-förmig ausgebildet ist.

5. Gerüstknoten nach einem der Ansprüche 1 bis 4, dadurch **gekennzeichnet,** daß der Fügeteilkörper (12) und das Hohlprofil (3) im Querschnitt im wesentlichen rechteckig sind, wobei die Innenabmessungen des Hohlprofils (3) nahezu mit den Außenabmessungen des Fügeteilkörpers (12) übereinstimmen.

6. Gerüstknoten nach einem der Ansprüche 1 bis 5, dadurch **gekennzeichnet,** daß das Fügeteil (1) als Strangpreß-Profil ausgebildet ist.

7. Gerüstknoten nach einem der Ansprüche 1 bis 4, dadurch **gekennzeichnet,** daß der Fügeteilkörper (12) und das Hohlprofil (3) im Querschnitt im wesentlichen beliebig sind, wobei die Innenabmessungen des Hohlprofils (3) nahezu mit den Außenabmessungen des Fügeteilkörpers (12) übereinstimmen und daß das Fügeteil (1) als Guß- oder Schmiedestück hergestellt ist.

8. Gerüstträger bestehend aus einem Gerüstknoten nach einem der Ansprüche 1 bis 7, dadurch **gekennzeichnet,** daß eine Vielzahl von Profilschienen (2) in dem Gerüstträger ausgebildet ist.

## Claims

1. Scaffold joint for shelter scaffolding made of aluminium, in which a joining portion (1) with profile head (11) and joining portion body (12) is fixed in a profile bar (2) with guide strips (24, 25) having a construction congruent with the profile head (11), and a hollow profile (3) surrounding the joining portion body (12) is connected thereto, characterised in that the profile head (11) of the joining portion (1) is fixed in the profile bar (2) by deformations of the guide strips (24, 25) formed by pressing on both sides of the profile head (11) in the form of pressing projections (22, 23), and connection of the hollow profile (3) to the joining portion body (12) takes place by linear pressing (31, 32, 33, 34) at least in the direction of pulling behind a rib (13, 14, 15) of the joining portion body (12).

2. Scaffold joint according to claim 1, characterised in that to fix the joining portion (1) in the profile bar (2), in addition point pressing is provided, with pressing points (26, 27, 28, 29) along the guide strips (24, 25) in the region of the profile head (11).

3. Scaffold joint according to claim 1 or 2, characterised in that the ribs (13, 14, 15) of the joining portion body (12) are arranged to extend perpendicularly to the longitudinal axis (17) of the joining portion (1) and hence perpendicularly to the axis of the hollow profile (3).

4. Scaffold joint according to any of claims 1 to 3, characterised in that the profile head (11) of the joining portion (1) is constructed in a T-shape.

5. Scaffold joint according to any of claims 1 to 4, characterised in that the joining portion body (12) and the hollow profile (3) are essentially rectangular in cross-section, wherein the inside dimensions of the hollow profile (3) almost match the outside dimensions of the joining portion body (12).

6. Scaffold joint according to any of claims 1 to 5, characterised in that the joining portion (1) is constructed as an extruded profile.

7. Scaffold joint according to any of claims 1 to 4, characterised in that the joining portion body (12) and the hollow profile (3) are essentially of any shape in cross-section, wherein the inside dimensions of the hollow profile (3) almost match the outside dimensions of the joining portion body (12) and in that the joining portion (1) is made as a casting or forging.

8. Scaffold beam consisting of a scaffold joint according to any of claims 1 to 7, characterised in that a plurality of profile bars (2) is formed in the scaffold beam.

## Revendications

1. Joint de charpente pour charpentes d'abris en aluminium, dans lequel un raccord (1) possédant une tête profilée (11) et un corps (12) de raccord immobilisé dans un profilé (2) d'une forme complémentaire de celle de la tête profilée (11), possédant des moulures de guidage (24, 25), et un profilé creux (3) qui entoure le corps (12) du raccord est assemblé à cet élément, caractérisé en ce que la tête profilée (11) du raccord (1) est immobilisée dans le profilé (2) par des déformations des moulures de guidage (24, 25), formées par repoussage, de part et d'autre de la tête profilée (11) sous la forme de bossages de pression (22, 23), et l'assemblage du profilé creux (3) avec le corps (12) du raccord s'effectue par un repoussage linéaire (31, 32, 33, 34), du moins dans la direction de la traction, en arrière d'une nervure (13, 14, 15) du corps (12) du raccord.

2. Joint de charpente selon la revendication 1, caractérisé en ce que, pour immobiliser le raccord (1) dans le profilé (2), il est prévu en supplément des repoussages ponctuels avec des points de pression (26, 27, 28, 29) le long des moulures de guidage (24, 25) dans la région de la tête profilée (11).

3. Joint de charpente selon la revendication 1 ou 2, caractérisé en ce que les nervures (13, 14, 15) du corps (12) du raccord sont disposées perpendiculairement à l'axe longitudinal (1) du raccord (1) et par conséquent perpendiculairement à l'axe du profilé creux (3).

4. Joint de charpente selon une des revendications 1 à 3, caractérisé en ce que la tête profilée (11) du raccord (1) est en forme de T.

5. Joint de charpente selon une des revendications 1 à 4, caractérisé en ce que le corps (12) du raccord et le profilé creux (3) sont sensiblement rectangulaires en section transversale, les dimensions intérieures du profilé creux (3) correspondant presqu'aux dimensions extérieures du corps (12) du raccord.

6. Joint de charpente selon une des revendications 1 à 5, caractérisé en ce que le raccord (1) est constitué par un profilé filé à la presse.

7. Joint de charpente selon une des revendications 1 à 4, caractérisé en ce que le corps (12) du raccord et le profilé creux (3) sont sensiblement quelconques en section transversale, les dimensions intérieures du profité creux (3) coïncidant approximativement aux dimensions extérieures du corps (12) du raccord, et en ce que le raccord (1) est fabriqué sous la forme d'une pièce de fonderie ou de forge.

8. Poutre de charpente composée d'un joint de charpente selon une des revendications 1 à 7 , caractérisée en ce que plusieurs profilés (2) sont formés dans la poutre de charpente.
